Europäisches Patentamt

European Patent Office

Office européen des brevets

(11) Veröffentlichungsnummer: **0 175 246**
A2

# (12) EUROPÄISCHE PATENTANMELDUNG

(21) Anmeldenummer: 85111337.3

(51) Int. Cl.⁴: **B 60 R 22/38**

(22) Anmeldetag: 07.09.85

(30) Priorität: 11.09.84 DE 3433297

(43) Veröffentlichungstag der Anmeldung: 26.03.86
Patentblatt 86/13

(84) Benannte Vertragsstaaten: DE FR GB IT SE

(71) Anmelder: **Autoflug GmbH & Co Fahrzeugtechnik,
Industriestrasse 10 Postfach 1180,
D-2084 Rellingen 2 (DE)**

(72) Erfinder: **Butenop, Klaus, Dipl.-Ing., Obendeich 29,
D-2209 Herzhorn (DE)**
Erfinder: **Grassmuck, Jürgen, Dipl.-Ing.,
Oeltingsallee 27, D-2080 Pinneberg (DE)**
Erfinder: **Flatau, Dagobert, Schwentinestrasse 12,
D-2000 Norderstedt (DE)**
Erfinder: **Struck, Klaus, Dipl.-Ing., Olendörp 46,
D-2000 Hamburg 46 (DE)**

(74) Vertreter: **Kühnemann, Klaus et al, Patentanwälte
Dipl.-Ing. Klaus Kühnemann Dr.-Ing. Karl-Ernst Müller
Sonderburgstrasse 36, D-4000 Düsseldorf 11 (DE)**

(54) Gurtblockiereinrichtung.

(57) Bei einer selbstsperrenden Gurtblockiereinrichtung, insbesondere für Kraftfahrzeuge, mit einem Dreipunkt-Sicherheitsgurt mit einem an einem Fahrzeugaufbauteil befestigten selbstsperrenden Gurtaufroller, der wenigstens ein gurtbandsensitives Blockiersystem zur Blockierung der Gurtaufwickelwelle aufweist, und mit einer zwischen Gurtaufroller und einem oberen Umlenkbeschlag angeordneten Klemmvorrichtung für das Gurtband, besteht das Problem, daß es bei schnellem Einzug des abgelegten Sicherheitsgurtes durch den Anschlag der Schloßzunge am Umlenkbeschlag zu einer ruckartigen Bremsung der Drehbewegung der Gurtaufwickelwelle kommt, wodurch die Blockierung des Gurtaufrollers ausgelöst wird, so daß nach der weiterhin erfolgenden Auslösung der Klemmvorrichtung eine Verstemmung des Gurtabschnittes zwischen Aufroller und Klemmvorrichtung eintritt. Zur Beseitigung dieses Problems ist vorgesehen, im Gurtaufroller (10) und/oder der Klemmvorrichtung (12) Mittel (24, 25, 27, 34, 36) zur Verhinderung eines unlösbaren Verstemmens des Gurtbandabschnittes (19) zwischen Gurtaufroller (10) und Klemmvorrichtung (12) vorzusehen.

Patentanwälte
Dipl.-Ing. Klaus Kühnemann
Dr.-Ing. Karl-Ernst Müller
Sonderburgstraße 36
4000 Düsseldorf 11
Telefon (02 11) 57 55 55
Postgirokonto: Köln 794 14 -501

— 1 —

0175246

Autoflug GmbH & Co

Fahrzeugtechnik

Industriestraße 10

2084 Rellingen 2

B e s c h r e i b u n g

Gurtblockiereinrichtung

Die Erfindung betrifft eine selbstsperrende Gurtblockiereinrichtung, insbesondere für Kraftfahrzeuge, mit einem
Dreipunkt-Sicherheitsgurt mit einem an einem Fahrzeugaufbauteil befestigten selbstsperrenden Gurtaufroller,
der wenigstens ein gurtbandsensitives Blockiersystem
zur Blockierung der Gurtaufwickelwelle aufweist, und
mit einer zwischen Gurtaufroller und einem oberen Umlenkbeschlag angeordneten Klemmvorrichtung für das Gurtband.

Derartige gattungsgemäße Gurtblockiereinrichtungen
gehen von einem selbstsperrenden Gurtaufroller aus,
wie er beispielsweise in der DE-OS 28 23 334 beschrieben
ist. Ein solcher Gurtaufroller verfügt wenigstens über
ein gurtbandsensitives Blockiersystem, so daß die
Blockierung der Gurtaufwickelwelle zumindest durch
schnellen Zug am Gurtband erfolgt. Hierzu ist ein
radial auslenkbares Sperrglied auf der Gurtaufwickelwelle formschlüssig gelagert, welches bei

0175246

Ansprechen der gurtbandsensitiven Blockierung, und zwar bei zu schnellem oder ruckartigem Auszug des Gurtbandes, aufgrund seiner von der gurtbandsensitiven Trägheitsscheibe gesteuerten radialen Auslenkung in eine entsprechend angeordnete gehäusefeste Verzahnung eingreift und so die weitere Drehung der Gurtaufwickelwelle unterbindet. Bei der Einzugsbewegung des Gurtbandes, d. h. insbesondere beim Aufwickeln des abgelegten Gurtes, sorgt die Trägheitsscheibe aufgrund ihrer Kopplung an das Sperrglied für eine anschlaglose Führung des Sperrgliedes innerhalb der gehäusefesten Verzahnung.

Ein derartiger Gurtaufroller arbeitet gattungsgemäß mit einer Klemmvorrichtung für das Gurtband zusammen, indem ein weiterer Zug am Gurtband nach Blockierung des Gurtaufrollers zusätzlich die Klemmwirkung der Klemmvorrichtung auslöst. Hierzu ist das Gurtband durch die Klemmvorrichtung vom Gurtaufroller herkommend zwischen einer gehäusefesten Verzahnung und einer radial verschiebbaren gegenverzahnten Riffelwalze über diese umgelenkt derart geführt, daß bei Zug am Gurtband die Riffelwalze gegen die gehäusefeste Verzahnung bis zum vollständigen Klemmen des Gurtbandes verschoben und gedrückt wird.

Die Einschaltung der Klemmvorrichtung bewirkt dabei die Ausschaltung des sogenannten Filmspuleneffekts, der sich dadurch erklärt, daß der in mehr oder weniger dichten Windungen auf der Gurtaufwickelwelle aufgewickelte Gurt unter Anwendung entsprechender Kräfte noch wesentlich strammer aufgewickelt werden könnte mit der Folge, daß nach Blockierung der Gurtaufwickelwelle zunächst einmal eine Verdichtung des auf der Welle befindlichen Gurtwickels mit entsprechender Freigabe an Gurtband erfolgt. Wenn jedoch nach Ansprechen des Blockiersystems des Gurtaufrollers die nachgeschaltete Klemmvorrichtung ebenfalls anspricht und das Gurtband festhält, ist dieser nachteilige Effekt der Freigabe an Gurtband infolge des Filmspuleneffekts vermieden.

Mit den gattungsgemäßen Gurtblockiereinrichtungen ist jedoch der Nachteil verbunden, daß beim Ablegen des Sicherheitsgurtes und einem damit verbundenen Emporschnellen der Schloßzunge bis zu ihrem Anschlag am Umlenkbeschlag eine Verstemmung des Gurtbandes im Bereich zwischen Gurtaufroller und Klemmvorrichtung auftreten kann, die zu einer völligen und dauerhaften Blockierung der Gurtblockiereinrichtung und damit zu deren Unbrauchbarkeit führt, und zwar aufgrund folgenden Bewegungsablaufs:

Beim Loslassen der Schloßzunge nach dem Ablegen des Sicherheitsgurtes zieht die Gurtaufwickelwelle unter der Wirkung der auf sie einwirkenden Aufrollfeder das Gurtband sehr schnell ein. Dabei wird auch die Trägheitsscheibe in Drehung versetzt, wobei die Massenträgheit des Systems beim Aufwickelvorgang durch den sich zunehmend vergrößernden Gurtwickel auf der Welle verstärkt wird. Beim plötzlichen Anschlag der Schloßzunge am Umlenkbeschlag wird die Aufwickelbewegung und damit auch die Drehbewegung der Gurtaufwickelwelle mit Sperrglied ruckartig gestoppt. Aufgrund der in der Trägheitsscheibe zu diesem Zeitpunkt noch gespeicherten Energie kommt es aufgrund des ruckartigen Anhaltens der Aufwickelbewegung in Einzugsrichtung unter Überwindung der Kraft der die Trägheitsscheibe und das Sperrglied aneinanderkoppelnden g-Wert-Feder zu der gegenseitigen Verdrehung von Trägheitsscheibe und Sperrglied, wobei die Trägheitsscheibe entsprechend ihrer Funktion das Sperrglied radial nach außen auslenkt und in Eingriff mit der gehäusefesten Verzahnung bringt. In dieser Stellung verbleiben die Teile, bis durch einen weiteren kräftigen Zug am Gurtband unter der Wirkung des Filmspuleneffektes etwas Gurtband freigegeben und nach Zurücklassen dieses freigegebenen Gurtbandes die Sperrung des Gurtaufrollers wieder gelöst werden kann.

Bei einer gattungsgemäßen Gurtblockiereinrichtung, bei der dem Gurtaufroller noch eine Klemmvorrichtung nachgeschaltet ist, führt bei Blockierung des Gurtaufrollers aufgrund des vorbeschriebenen Umstandes ein weiteres kräftiges Ziehen am Gurtband nur zum Ansprechen der Klemmvorrichtung, wodurch bei straff gespanntem Gurtband zwischen Gurtaufroller und Klemmvorrichtung die gesamte Blockiereinrichtung gegeneinander verstemmt und ohne Demontage nicht mehr brauchbar ist.

Daher liegt der Erfindung die Aufgabe zugrunde, eine Gurtblockiereinrichtung der eingangs genannten Gattung so zu verbessern, daß die Gurtblockiereinrichtung auch nach schnellem Einzug des Gurtbandes in den Gurtaufroller mit Anschlag der Schloßzunge am Umlenkbeschlag funktionsfähig bleibt und der Sicherheitsgurt danach erneut angelegt werden kann.

Die Lösung dieser Aufgabe ergibt sich einschließlich vorteilhafte Ausgestaltungen und Weiterbildungen aus dem Inhalt der Patentansprüche, welche dieser Beschreibung vorangestellt sind.

Nach einem Ausführungsbeispiel der Erfindung ist vorgesehen, die Achse der beweglichen Riffelwalze mittels einer entsprechend ausgelegten Feder derart unter Vorspannung zu stellen, daß die Energie der stoßartig abgebremsten Gurtwickelmasse nicht ausreicht, um die Riffelwalze und damit die Klemmvorrichtung
zu betätigen.

Nach einem anderen Ausführungsbeispiel der Erfindung
ist der Betätigungsweg der Riffelwalze aufgrund
der Abmessung des die Achse der Riffelwalze führenden
Langloches und/oder der Wahl des Hebelarmes, mit
welchem die Gurtauszugskraft am Drehpunkt der Riffelwalze angreift, größer als der Entriegelungsweg
im Gurtaufroller gewählt, der durch das Rückdrehen
der Trägheitsscheibe und Herausführen des Sperrgliedes
aus der gehäusefesten Verzahnung notwendig ist.

Bei einem weiteren bevorzugten Ausführungsbeispiel
der Erfindung schließlich richtet sich die Verhinderung
des Verstemmeffektes auf die Ausbildung der Verbindung
zwischen Trägheitsscheibe und Sperrglied, indem
der oder die Stifte der die Bauteile aneinanderkoppelnden Stift-Schlitz-Verbindung an ihrer der Drehrichtung
bei Gurtauszug zugewandten Seite hin abgeschrägt
sind, wobei gleichzeitig die damit zusammenwirkende
Fläche der Ausnehmung im Sperrglied mit einer entsprechenden Anschrägung versehen ist.

Mit der Erfindung ist der Vorteil verbunden, daß
die durch schnellen Gurteinzug und Anschlag der
Schloßzunge am Umlenkbeschlag bewirkte Sperrung
des Blockiersystems des Gurtaufrollers entweder
durch Zug am Gurtband ohne Ansprechen der Klemmvorrichtung wieder lösbar ist oder daß eine derartige
Sperrung im Gurtaufroller durch den Bewegungsablauf
im Gurtaufroller ohne Zutun sich selbständig wieder
aufhebt, wodurch eine Sperrung der Gurtblockiereinrichtung insgesamt vermieden ist.

In der Zeichnung sind Ausführungsbeispiele der Erfindung wiedergegeben, welche nachstehend beschrieben werden. Es zeigen:

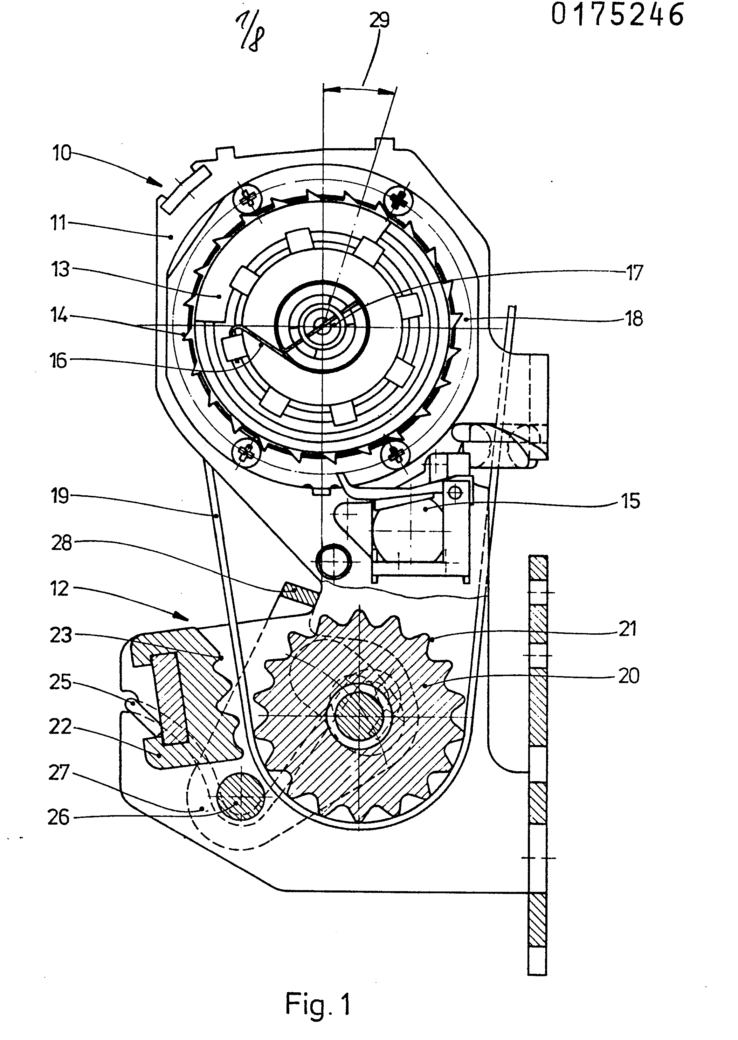

Fig. 1    eine Gurtblockiereinrichtung mit selbstsperrendem Gurtaufroller und Klemmvorrichtung
          in offener Stellung,

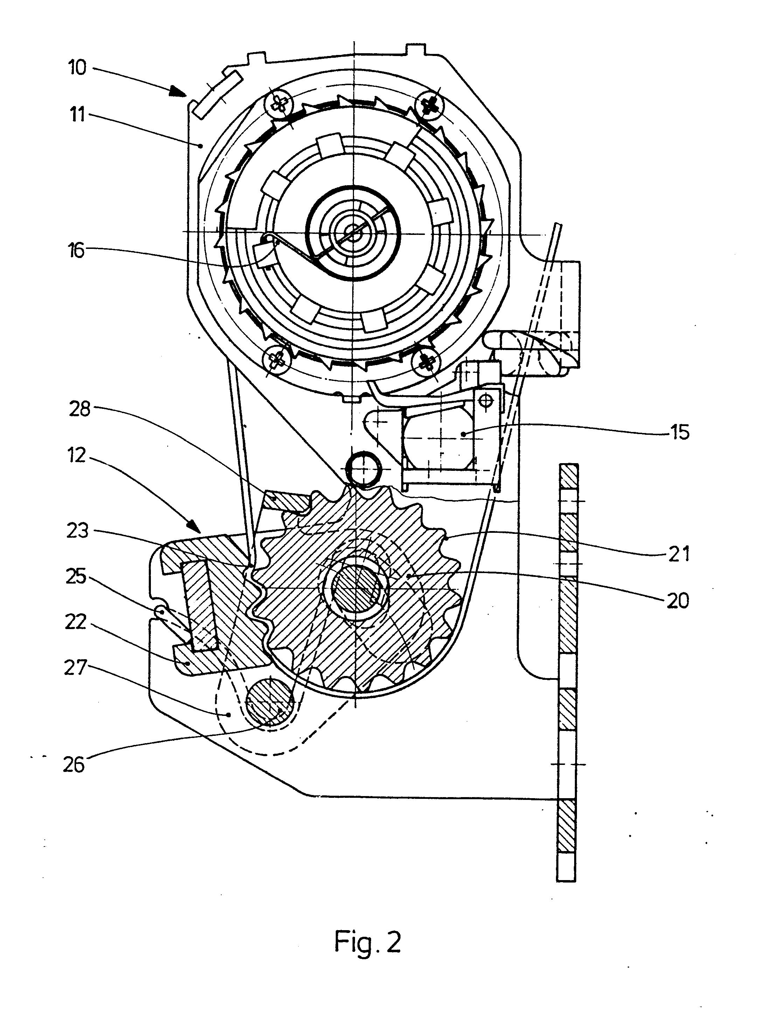

Fig. 2    den Gegenstand der Figur 1 in Blockierstellung,

Fig. 3    in vereinfachter Seitenansicht ein Ausführungs-
          beispiel der erfindungsgemäßen Gurtblockier-
          einrichtung,

Fig. 3a   das Ausführungsbeispiel gemäß Fig. 3 in
          der anderen Seitenansicht ohne Sperrsystem
          des Gurtaufrollers,

Fig. 3b   ausschnittsweise eine geschnittene Darstellung
          der Filmspule eines Gurtaufrollers,

Fig. 4    in schematischer Seitenansicht ein weiteres
          Ausführungsbeispiel der Gurtblockiereinrichtung,

Fig. 5    das Sperrglied des Gurtaufrollers in einer
          Aufsicht,

Fig. 6    eine Seitenansicht von Sperrglied mit aufgesetzter Trägheitsscheibe.

Fig. 7    ein weiteres Ausführungsbeispiel der Gurtblockiereinrichtung in Seitenansicht bei
          eingezogenem Gurtband,

Fig. 8 den Gegenstand der Fig. 7 bei ausgezogenem
Gurtband.

Die Gurtblockiereinrichtung besteht aus einem selbstsperrenden Gurtaufroller 10, an dessen Gehäuse 11
eine Klemmeinrichtung 12 angeschlagen ist. Der selbstsperrende Gurtaufroller 10 ist bei abgenommener
Abdeckkappe dargestellt, so daß seine sogenannte
Systemseite sichtbar ist. Hierzu sind aus den Figuren
1 und 2 im einzelnen die Trägheitsscheibe 13 mit ihrer
Außenverzahnung 14, der damit zusammenwirkende fahrzeugsensitive Sensor 15 sowie die auf die Trägheitsscheibe 13 einwirkende g-Wert-Feder 16 ersichtlich.
Unter der Trägheitsscheibe 13 ist auf der Welle 17
des Gurtaufrollers 10 nicht sichtbar das Sperrglied
angeordnet, welches durch die Trägheitsscheibe 13 radial
auslenkbar bis zum Eingriff in die ebenfalls nicht
sichtbare Verzahnung eines Druckringes 18 ist. Im
einzelnen ergeben sich Aufbau und Wirkungsweise eines
derartigen Gurtaufrollers aus der in der DE-OS 28 34 334
erfolgten Beschreibung.

Vom Gurtaufroller 10 herkommend ist das Gurtband 19
in Form einer nach unten gezogenen Schlaufe durch die
Klemmvorrichtung 12 geführt, welche aus einer als
alleinige Umlenkung des Gurtbandes 19 dienenden und
mit einer Außenverzahnung 21 versehenen Walze 20 und
einem am Gehäuse 11 angeordneten Klemmstück 22 mit
einer entsprechenden Verzahnung 23 besteht, wobei das
Gurtband 19 zwischen Riffelwalze 20 und Klemmstück
22 hindurchgeführt und die Riffelwalze 20 etwa halbseitig
umschlingend nach oben in Richtung des nicht dargestellten Umlenkbeschlages für das Gurtband geführt
ist.

0175246

Die Riffelwalze 20 ist in einem Langloch 24 verschieblich gelagert, welches eine etwa bohnenförmige Gestalt derart aufweist, daß die Walze 20 bei ihrer Verschiebung einen Kurvenabschnitt in Richtung auf das Klemmstück 22 zu durchläuft. In ihrer Ruhestellung ist die Walze durch eine im wesentlichen S-förmige Bügelfeder 25 gehalten, welche mit ihrem einen Ende am Gehäuse 11 eingehängt ist und mit dem anderen Ende auf die Welle der Walze 20 einwirkt, wobei ein unterhalb der Walzenanordnung am Gehäuse 11 angeordneter Zapfen 26 als Umlenkpunkt für die Feder 25 und als ideeller Drehpunkt für die Schwenkbewegung der Walze 20 im Langloch 24 wirkt.

Auf dem Zapfen 26 ist schwenkbar ein Bügel 27 angeordnet, der das Wellenende der Riffelwalze 20 umfaßt und an einem tangential nach oben an der Riffelwalze vorbeireichenden Arm einen Sperrsteg 28 trägt, der bei Ruhelage der Riffelwalze 20 außerhalb deren Umfangsverzahnung 21 gelegen ist. Der Bügel 27 hat die Aufgabe, den Klemmvorgang zu steuern und für eine Verhinderung einer Zahn-auf-Zahn-Blockierung der Umfangsverzahnung 21 der Walze 20 mit der zugehörigen Verzahnung 23 des Klemmstückes 22 Sorge zu tragen, wie an anderer Stelle noch erläutert wird.

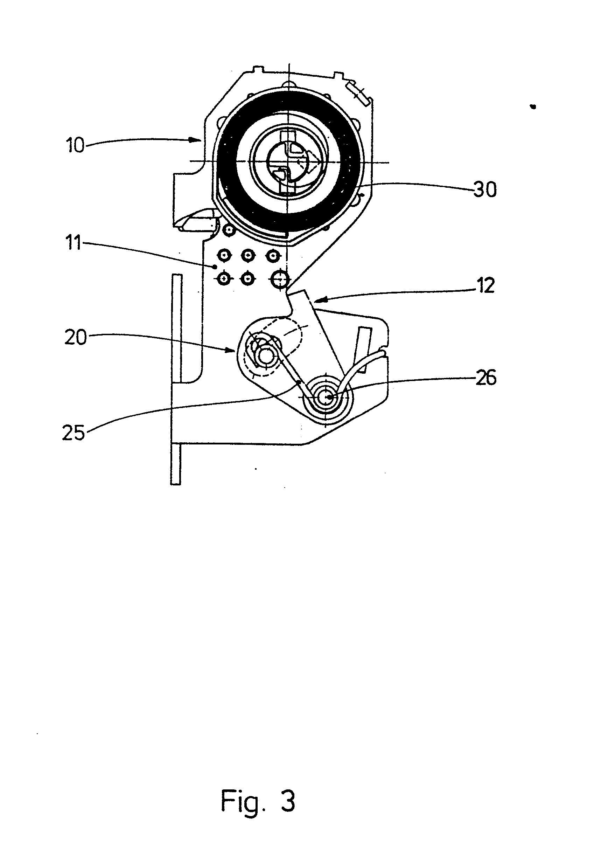

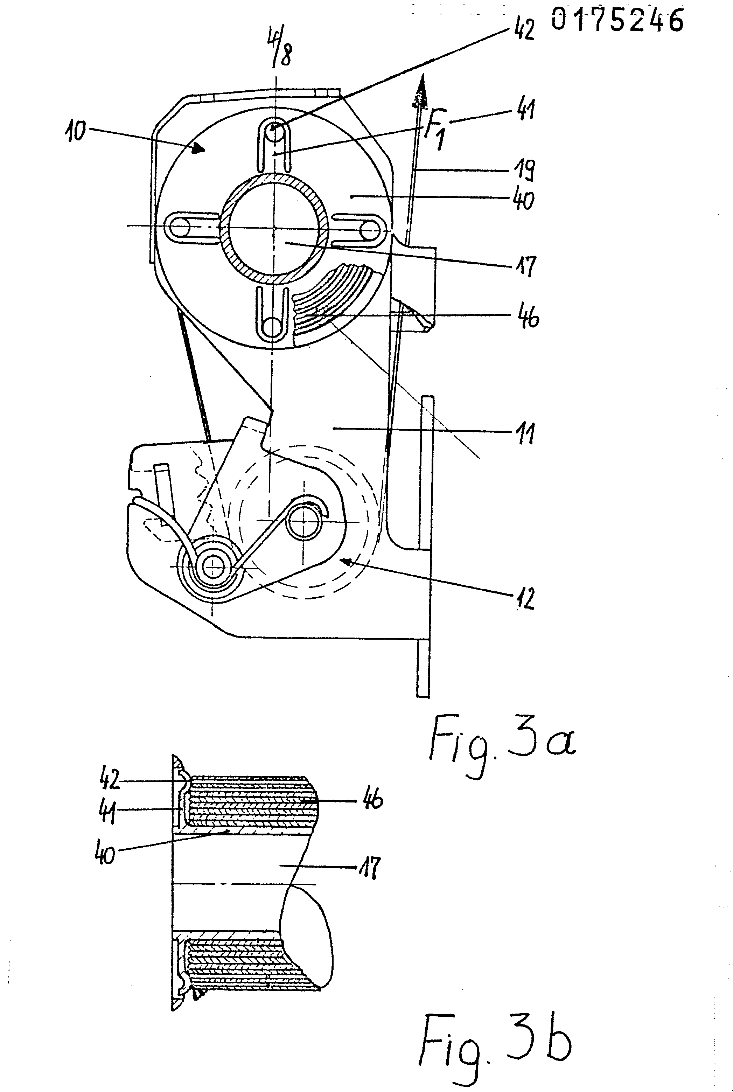

Im Betrieb arbeitet die vorbeschriebene Gurtblockiereinrichtung folgendermaßen:
Beim Einzug des Gurtbandes unter der Wirkung der Gurtaufrollfeder 30 (Figur 3) läuft das Gurtband durch die Klemmvorrichtung 12 bei gleichzeitiger Drehung der Riffelwalze 20 hindurch. Da die Riffelwalze 20 durch die Bügelfeder 25 nach unten in ihre Ruhelage gedrückt und dort gehalten wird, ist der Zwischenraum zwischen der Umfangsverzahnung 21 der Walze 20 und

- 9 -

der Verzahnung 23 des Klemmstücks 22 ausreichend groß. Im Blockierfall spricht aufgrund der eingangs beschriebenen Wirkungsweise des Gurtaufrollers 10 dieser zuerst an, wodurch sich eine entsprechend große Gurtauszugskraft aufbaut. Diese sorgt für ein Anheben der Riffelwalze 20 im Langloch 24 und damit verbunden für ein Verschwenken des Bügels 27. Dadurch kommt nun der Sperrsteg 28 des Bügels 27 in Eingriff mit der Umfangsverzahnung 21 der Riffelwalze 20 und hält so die Drehbewegung der Riffelwalze 20 an definierter Stelle an, so daß sich Zahnkopf der Verzahnung 21 und Zahngrund der Verzahnung 23 exakt gegenüberliegen. Bei weiterem Zug am Gurtband 19 infolge der beginnenden Vorwärtsverlagerung des Körpers der angeschnallten Person kippt nun die Riffelwalze 20 mit Umfangsverzahnung 21 immer stärker in die Verzahnung 23 des Klemmstücks 22 und klemmt so das Gurtband 19 sicher fest, wobei die Klemmkraft ergänzt wird durch die beträchtliche, zwischen Gurtband und Verzahnungen 21, 23 wirkenden Reibungskräfte.

Bei dem Ausführungsbeispiel der Erfindung gemäß Figur 3 ist nun die Feder 25 derart ausgelegt, daß die Energie des stoßartig abgebremsten Gurtwickels auf der Gurtaufwickelwelle 17 nicht ausreicht, um die Klemmvorrichtung zu betätigen, insbesondere also die Riffelwalze 20 aus ihrer Ruhelage herauszuheben. Zwar kommt es bei diesem Ausführungsbeispiel beim Zurückschnellen der Schloßzunge noch kurzzeitig zu einer Blockierung des Gurtaufrollers 10 in der eingangs beschriebenen Weise, jedoch ist diese Blockierung durch kräftigen Zug am Gurtband 19 noch wieder lösbar, da die Klemmvorrichtung noch frei ist. Dadurch kann zunächst noch soviel Gurtband aus dem Gurtaufroller 10 herausgezogen werden, um die Blockierung des Gurtaufrollers 10 wieder zu lösen.

0175246

Wie sich aus den Figuren 3a und 3b ergibt, läßt sich die Möglichkeit, durch Ausziehen des Gurtbandes 19 aus dem Gurtaufroller 10 dessen Blockierung wieder zu lösen, dadurch verbessern, daß beim Einzug des Gurtbandes 19 in den Gurtaufroller 10 der beschriebene Filmspuleneffekt bewußt verstärkt wird. Hierzu sind auf der Innenseite der auf der Gurtaufwickelwelle 17 zur Aufnahme des Gurtbandes 19 angeordneten Filmspule 40 Federzungen 41 angeordnet, die den sich beim Aufrollen des Gurtbandes 19 bildenden Gurtwickel 46 einfassen. Indem nun die Federzungen 41 im Bereich der letzten, äußersten Lagen des Gurtbandes 19 nach abgeschlossenem Gurteinzug Buckel 42 aufweisen, sorgen diese Buckel 42 für die Bildung von Luftpolstern zwischen diesen letzten, äußersten Gurtbandlagen, so daß eine dadurch definierte Gurtbandlänge durch Zug am Gurtband 19 aus dem Gurtaufroller 10 herausgezogen werden kann, um dessen eingetretene Blockierung zu lösen und den Verstemmeffekt zu vermeiden.

Dieser bewußt herbeigeführte Filmspuleneffekt ist im Falle eines Unfalls unbedenklich, da seine Auswirkungen durch das Ansprechen der Klemmvorrichtung 12 unter Überwindung der Vorspannkraft der Bügelfeder 25 aufgehoben werden.

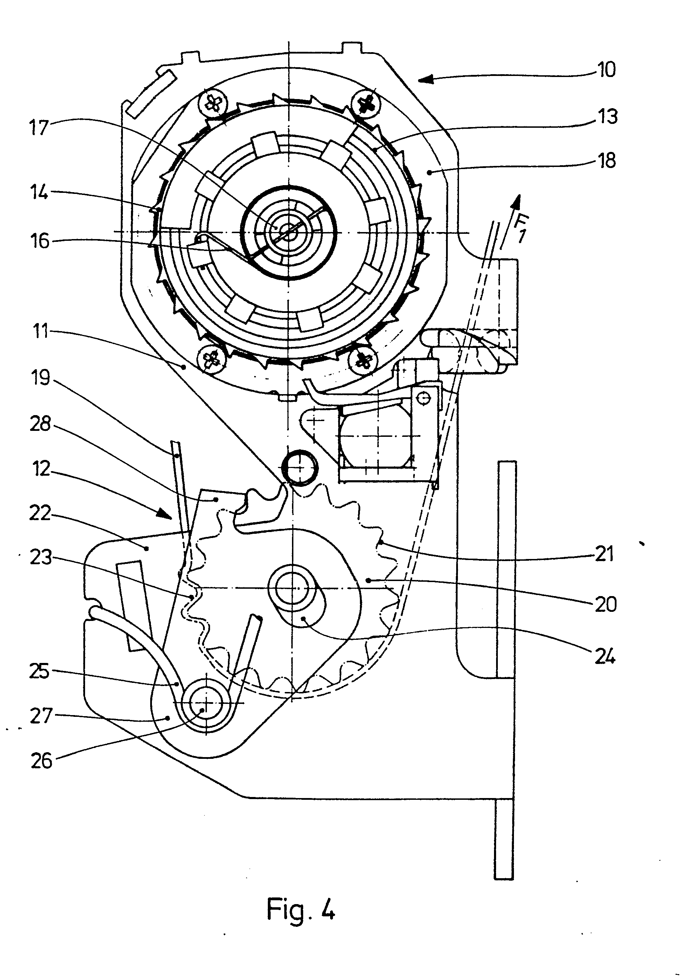

Bei dem in Figur 4 ausgeführten Ausführungsbeispiel ist der Betätigungsweg, der innerhalb der Klemmvorrichtung 12 bis zu deren Ansprechen zurückgelegt werden muß, größer als der Entriegelungsweg des Gurtaufrollers 10 ausgelegt, so daß auch bei diesem Ausführungsbeispiel die eingetretene Blockierung des Gurtaufrollers 10 durch Zug am Gurtband 19 wieder aufhebbar ist. Der Entriegelungsweg 29 des Gurtaufrollers 10 ergibt sich aus dem Verdrehungsweg zwischen Trägheitsscheibe 13 und dem Sperrglied 31, da die Steuerung des Sperrgliedes über die Drehbewegung der Trägheitsscheibe 13 erfolgt. Kann also so viel Gurtband aus dem Gurtwickel herausgezogen werden, daß sich die Trägheitsscheibe 13 um den vorgegebenen Verdrehungsspielraum (Stift-Schlitz-Verbindung), weiterdrehen kann, so kommt dadurch auch das Sperrglied aus der zugehörigen Innenverzahnung des gehäusefesten Druckringes 18 wieder frei.

Demgegenüber setzt sich der Betätigungsweg der Klemmeinrichtung 12 aus dem Weg zusammen, den die Riffelwalze 20 im Langloch 24 bis zum Eingriff des Sperrsteges 28 in die Umfangsverzahnung 21 der Walze 20 zurücklegen muß, und aus dem Schwenkweg, der anschließend bis zum festen Eingriff der Umfangsverzahnung 21 in die Klemmstückverzahnung 23 zurückzulegen ist; der letztgenannte Weg ergibt sich insbesondere auch als Funktion des Hebelarmes, mit welchem die Gurtauszugskraft $F_1$ die Verschwenkung des Bügels 27 um den Zapfen 26 herbeizuführen trachtet.

Ist also dieser so zusammengesetzte Betätigungsweg der Klemmvorrichtung 12 größer als der Entriegelungsweg 29 im Gurtaufroller 10, so kann die dafür erforderliche Gurtlänge aus dem Automaten herausgezogen werden, so daß ohne ein Ansprechen der Klemmvorrichtung 12 die durch das Zurückschnellen der Schloßzunge herbeigeführte Blockierung des Gurtaufrollers 10 wieder beseitigt werden kann.

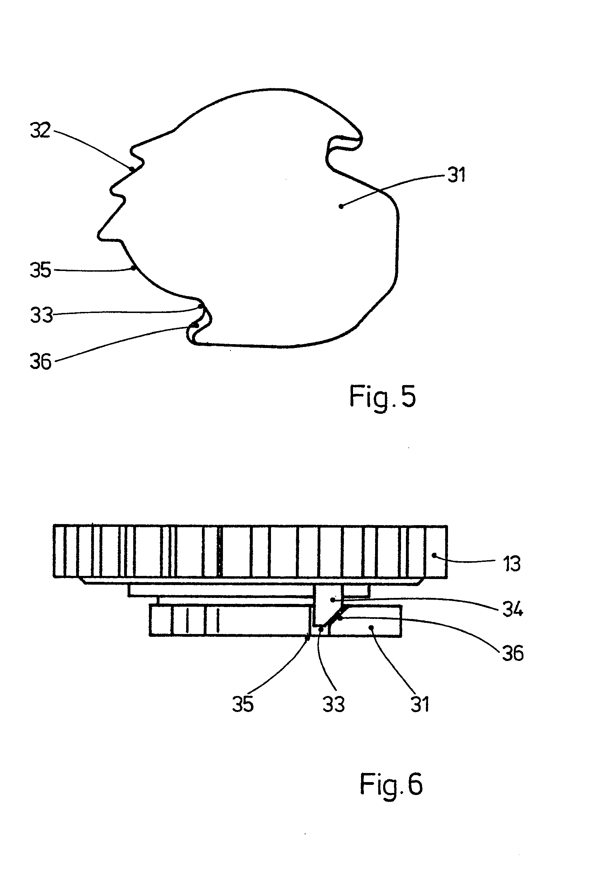

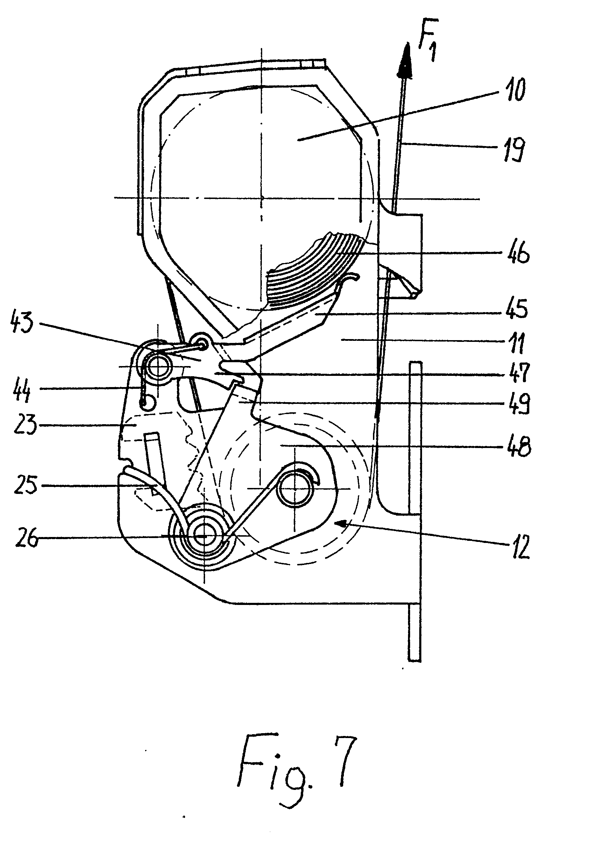

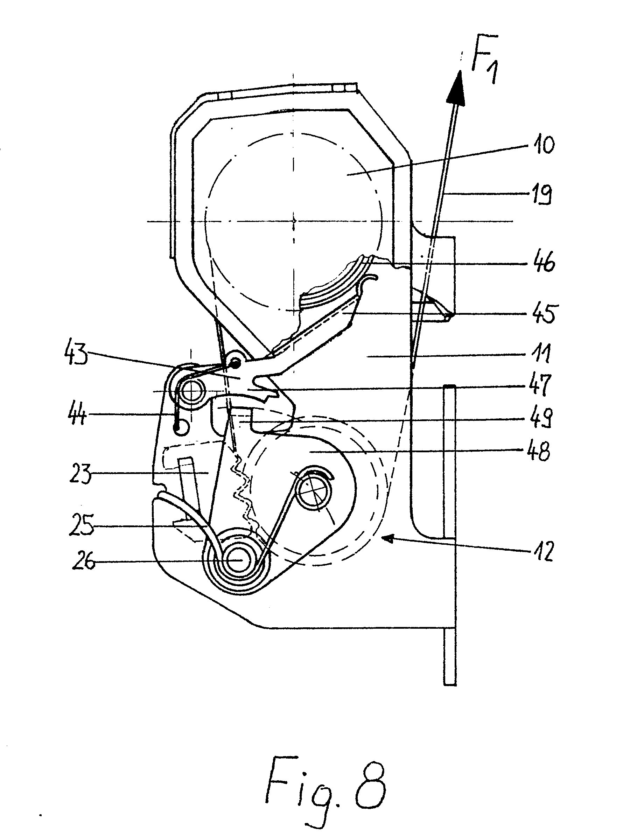

In den Figuren 5 und 6 ist ein Ausführungsbeispiel der Erfindung wiedergegeben, bei welchem Maßnahmen im Gurtaufroller 10 vorgesehen sind, die eine Verriegelung des Gurtaufrollers als Folge des Einzuges des Gurtbandes 19 von vornherein verhindern sollen. Hierzu ist die Stift-Schlitz-Verbindung zwischen

0175246

Trägheitsscheibe 13 und dem in Figur 5 gesondert dargestellten Sperrglied 31 in besonderer Weise gestaltet. Bei dem in dem Sperrglied 31 vorgesehenen Schlitz handelt es sich um eine Aussparung 33 im Umfang des Sperrgliedes 31, in welche ein an der Trägheitsscheibe 13 angeformter Stift 34 eingreift. Vorzugsweise sind zwei derartige Verbindungsstellen 33, 34 ausgebildet, um einerseits eine Fehlmontage der Bauteile zu verhindern und andererseits auch auf einen gegenseitigen Ausgleich der zwangsweise vorhandenen Fertigungstoleranzen hinzuwirken.

Die Aussparungen 33 im Umfang des Sperrgliedes 31 sind derart gestaltet, daß sie an ihrer der Drehrichtung bei Gurtauszug abgewandten Seite vom Aussparungstiefsten radial schräg und/oder kurvenartig nach außen verlaufen und eine senkrechte Kante 35 aufweisen. In Drehrichtung des Gurtauszuges gesehen nimmt die gegenüberliegende Grenzfläche 36 einen zur Umfangslinie des Sperrgliedes 31 senkrechten Verlauf, und gleichzeitig ist diese Grenzfläche 36 in Richtung auf die daneben auf der Gurtaufwickelwelle 17 gelagerte Trägheitsscheibe 13 abgeschrägt, und zwar vorzugsweise mit einem Winkel von größer fünfzehn Grad.

Entsprechend dieser Ausbildung der Aussparung 33 im Umfang des Sperrgliedes 31 sind die an der Trägheitsscheibe 13 angeformten Stifte 34 an ihrer, mit der schrägen Grenzfläche 36 zusammenwirkenden Seite mit einer entsprechenden Schräge versehen.

Bei diesem Ausführungsbeispiel kommt es nach Loslassen der Schloßzunge beim Ablegen des Sicherheitsgurtes zu folgendem Bewegungsablauf:
Beim Einzug des Gurtbandes 19 drehen sich Sperrglied 31 und Trägheitsscheibe 13 in der Darstellung gemäß den Figuren 5 und 6 im Uhrzeigersinn. Nach dem Anschlagen der Schloßzunge am Umlenkbeschlag und der
damit verbundenen ruckartigen Abbremsung der Drehbewegung des angewachsenen Gurtwickels auf der Gurtaufwickelwelle 17 des Gurtaufrollers 10 dreht sich
die Trägheitsscheibe 13 unter der Wirkung ihrer
konstruktiv bedingten Masseträgheit weiter und lenkt
dabei das Sperrglied 31 nach außen bis zum Eingriff
seiner Verzahnung 32 in den Druckring 18 radial
aus, indem der Stift 34 der Trägheitsscheibe 13
an der radial schräg nach außen verlaufenden Kante
35 der Ausnehmung 33 im Sperrglied 31 entlanggleitet.

Der Aufprall der Zähne 32 des Sperrgliedes 31 in
der Verzahnung des Druckringes 18 erzeugt eine rückprallende
Reaktionskraft, die nun zu einer Umkehr der Bewegungsrichtung der Trägheitsscheibe 13 führt, so daß diese
nun mit der abgeschrägten Seite ihrer Stifte 34
auf die schräge Grenzfläche 36 des Sperrgliedes
31 aufläuft. Aufgrund der den Bauteilen noch innewohnenden
Bewegungsenergie gleiten die Bauteile nun aufeinander
auf und durch diese Zwangsführung wird auch das
Sperrglied 31 entgegen dem Uhrzeigersinn gedreht,
wodurch die Verzahnung 32 des Sperrgliedes 31 wieder
aus der Verzahnung des Druckringes 18 freikommt.
Gleichzeitig wird durch das reibungsbehaftete Aufgleiten
der Bauteile aufeinander bis zur Aufzehrung des
konstruktions- und fertigungsbedingten axialen Lagerspiels der Trägheitsscheibe 13 die überschüssige
Bewegungsenergie stoßmildernd vernichtet. Die verbleibende
Rückprallwirkung in Gurtauszugsrichtung der Trägheitsscheibe bei Aufzehrung des Axialspiels wird durch
die schrägen Kontaktflächen reduziert, wobei die
Rückprallenergie senkrecht in den Kontaktflächen wirkt, also nicht in Umfangsrichtung. Die g-wert-Feder hält die Trägheitsscheibe in dieser Position fest, so daß ein pendelndes Hin- und Herschlagen von Trägheitsscheibe 13 und daran gekoppelten Sperrglied 31 vermieden ist. Insofern wird die anfänglich eingetretene kurzzeitige Blockierung des Gurtaufrollers 10 durch die Eigenbewegung seiner Bauteile aufgrund der erfindungsgemäßen Gestaltung unmittelbar und selbsttätig wieder aufgehoben.

Die dämpfende und energievernichtende Ausbildung der Stift-Schlitz-Verbindung 33, 34 kann sowohl unabhängig von der beschriebenen Ausgestaltung als auch in Kombination damit herbeigeführt und/oder verbessert werden, indem an den Bewegungsflächen zwischen Trägheitsscheibe 13 und Sperrglied 31, insbesondere im Bereich der Stift-Schlitz-Verbindung 33, 34, ein dämpfendes Material, vorzugsweise Gummi, aufgebracht ist. Das gleiche kann erfindungsgemäß auch an der Berührungsstelle zwischen Gurtaufwickelwelle 17 des Gurtaufrollers 10 und dem darauf formschlüssig gelagerten Sperrglied 31 geschehen, so daß der Sperreffekt des Gurtaufrollers infolge des Zurückschnellens der Schloßzunge und deren Anschlag am Umlenkbeschlag nicht eintritt, vielmehr aufgrund einer energievernichtenden Dämpfung die Blockiereinrichtung gelöst bleibt.

Bei einem weiteren Ausführungsbeispiel der Erfindung, wie es in den Figuren 7 und 8 wiedergegeben ist, ist vorgesehen, durch Einschaltung einer Tastvorrichtung 43 die Klemmvorrichtung 12 bei eingezogenem Gurtband ganz außer Funktion zu setzen, so daß entsprechend dem bereits in den Figuren 3 bis 3b beschriebenen Ausführungsbeispiel aufgrund des Filmspuleneffektes wiederum so viel an Gurtband 19 aus dem Gurtaufroller 10 herausgezogen werden kann, um dessen kurzzeitig eingetretene Blockierung nach Beendigung der Gurteinzugsbewegung zu lösen.

Hierzu ist an dem Gehäuse 11 ein zweiarmiger Hebel 43 gelagert, der mit seinem einen Arm 45 unter der Wirkung einer Feder 44 ständig am Umfang des sich beim Gurtbandeinzug auf der Filmspule 40 des Gurtaufrollers 10 bildenden Gurtwickel 46 anliegt. Der andere Arm 47 des Hebels 43 ist derart angeordnet, daß er bei eingezogenem Gurtband (Figur 7) in Eingriff mit einem Anschlag 49 eines Bügels 48 steht, wobei der Bügel 48 auf dem Gehäusezapfen 26 der Klemmvorrichtung 12 das Wellenende der Riffelwalze 20 einfassend und mit der Riffelwalze 20 schwenkend gelagert ist.

Bei angelegtem Sicherheitsgurt und dadurch teilweise ausgezogenem Gurtband 19 (Figur 8) ist der unter der Wirkung der Feder 44 gegen den verbleibenden Gurtwickel 46 gepreßte Arm 45 so weit in den Gurtaufroller 10 hineinverschwenkt, daß der andere Arm 47 des Hebels 43 aus der Schwenkbahn des Bügels 48 mit Anschlag 49 herausgetreten ist. Kommt es bei dieser Bewegungsstellung zu einem Anwachsen der Gurtauszugskraft $F_1$ infolge eines Unfalls, so kann die Klemmvorrichtung 12 mit dem bereits beschriebenen Bewegungsablauf sofort ansprechen und das Gurtband einklemmen.

Nach Loslassen der Schloßzunge beim Ablegen des Sicherheitsgurtes wächst nun der Gurtwickel 46 durch das sich aufwickelnde Gurtband 19 ständig an und und drückt so den Arm 45 des Hebels 43 nach außen. Dadurch gerät nun der andere Arm 47 des Hebels 43 in die Bewegungsbahn des Bügels 48, was zur Folge hat, daß nun bei einem kräftigen Zug am Gurtband 19 zur Lösung der eingetretenen Blockierung des Gurtaufrollers 10 die Klemmvorrichtung 12 nicht ansprechen kann, weil die Bewegung der Riffelwalze 20 gegen das Klemmstück 23 durch die Blockierung des Bügels 48 mittels der Hebel 43, 47 verhindert ist. Bei eingezogenem Gurtband ist demnach die Klemmvorrichtung 12 außer Funktion gesetzt, so daß eine Verstemmung des Gurtbandes zwischen Gurtaufroller 10 und Klemmvorrichtung 12 nach Abschluß des Gurteinzuges und eventuell aufgetretener Blockierung des Gurtaufrollers 10 nicht eintreten kann, weil die unter Umständen eingetretene Blockierung des Gurtaufrollers 10 durch einen kräftigen Auszug des Gurtbandes 19 aus dem Gurtaufroller 10 ohne ein Ansprechen der Klemmvorrichtung 12 wieder lösbar ist. In diesem Zusammenhang kann es vorteilhaft sein, auch bei dem vorbeschriebenen Ausführungsbeispiel den Filmspuleneffekt entsprechend dem in Figuren 3a und 3b dargestellten Ausführungsbeispiel zu verstärken.

Die in der vorstehenden Beschreibung, den Patentansprüchen, der Zusammenfassung und der Zeichnung offenbarten Merkmale des Gegenstandes dieser Unterlagen können sowohl einzeln als auch in beliebigen Kombinationen untereinander für die Verwirklichung der Erfindung in ihren verschiedenen Ausführungsformen wesentlich sein.

Patentansprüche

- 17 -

**P a t e n t a n s p r ü c h e**

1. Selbstsperrende Gurtblockiereinrichtung, insbesondere für Kraftfahrzeuge, mit einem Dreipunkt-
   Sicherheitsgurt mit einem an einem Fahrzeugaufbauteil
   befestigten selbstsperrenden Gurtaufroller, der
   wenigstens ein gurtbandsensitives Blockiersystem
   zur Blockierung der Gurtaufwickelwelle aufweist,
   und mit einer zwischen Gurtaufroller und einem
   oberen Umlenkbeschlag angeordneten Klemmvorrichtung für das Gurtband, dadurch gekennzeichnet, daß im Gurtaufroller (10) und/oder
   der Klemmvorrichtung (12) Mittel (24, 25, 27,
   34, 36) zur Verhinderung eines unlösbaren
   Verstemmens des Gurtbandabschnittes (19) zwischen
   Gurtaufroller (10) und Klemmvorrichtung (12)
   vorgesehen sind.

2. Gurtblockiereinrichtung nach Anspruch 1, dadurch
   gekennzeichnet, daß die Klemmvorrichtung (12) von einer gegen Federdruck (25) in einem bohnenförmigen Langloch (24) um einen Drehpunkt (26)
auf ein gehäusefestes Klemmstück (22) mit Verzahnung (23) zu verschieblich gelagerten außenverzahnten
(21) Walze (20) gebildet ist, wobei das Gurtband
(19) vom Gurtaufroller (10) her um die Walze
(20) und zwischen Walze (20) und Klemmstück (22)
in Richtung des Umlenkbeschlages geführt ist,
und wobei zur Einsteuerung der Verzahnungen (21,
23) auf dem gehäusefesten Zapfen (26) ein zweiarmiger Bügel (27) drehbar gelagert ist, der
mit einem Arm die Achse der Welle (20) umfaßt
und an seinem anderen Arm mit einem im Auslösefall mit der Außenverzahnung (21) der Welle (20)
zusammenwirkenden Sperrsteg (28) versehen ist.

3. Gurtblockiereinrichtung nach Anspruch 2,
dadurch gekennzeichnet, daß an der auf der Gurtaufwickelwelle (17) sitzenden Filmspule (40)
den Gurtwickel (46) einfassende Federzungen (41)
angeordnet sind.

4. Gurtblockiereinrichtung nach Anspruch 3, dadurch
gekennzeichnet, daß die Federzungen (41) mit
einem Buckel (42) nur die letzten Aufwickellagen
des eingezogenen Gurtbandes (19) einfassen.

5. Gurtblockiereinrichtung nach Anspruch 1 oder
einem der vorangehenden Ansprüche, bei dem auf
einem Fortsatz der Gurtaufwickelwelle ein radial
bis zum Eingriff in eine gehäusefeste Verzahnung
auslenkbares Sperrglied und daneben ein über
eine Stift-Schlitz-Verbindung an das Sperrglied
gekoppelte Trägheitsscheibe zur Steuerung des Sperrgliedes gelagert sind, dadurch gekennzeichnet, daß Stift (34) und Schlitz (33) mit die Energieübertragung dämpfenden Mitteln (36) versehen sind.

6. Gurtblockiereinrichtung nach Anspruch 5, dadurch gekennzeichnet, daß Stift (34) und Schlitz (33) an ihren in Drehrichtung bei Gurtauszug anliegenden Flächen (36) einander entsprechend abgeschrägt gestaltet sind.

7. Gurtblockiereinrichtung nach Anspruch 6, dadurch gekennzeichnet, daß die Schräge der Grenzfläche (36) des Sperrgliedes (31) in Richtung auf die Trägheitsscheibe (13) zu ansteigend verläuft.

8. Gurtblockiereinrichtung nach Anspruch 7, dadurch gekennzeichnet, daß die Anschrägung größer fünfzehn Grad beträgt.

9. Gurtblockiereinrichtung nach einem der Ansprüche 5 - 8, dadurch gekennzeichnet, daß der Schlitz zur Aufnahme des Stiftes (34) als Aussparung (33) im Umfang des Sperrgliedes (31) ausgebildet ist, wobei die der Drehrichtung der Gurtaufwickelwelle (17) bei Gurtauszug entgegengesetzte Kante (35) vom Ausnehmungstiefsten schräg und/oder kurvenartig radial nach außen verläuft und daß die gegenüberliegende Kante einen senkrecht zur Umfangslinie gerichteten Verlauf aufweist.

10. Gurtblockiereinrichtung nach Anspruch 9, daß zwei sich gegenüberliegende Stift-Schlitz-Verbindungen (33, 34) vorgesehen sind.

11. Gurtblockiereinrichtung nach Anspruch 5, dadurch
gekennzeichnet, daß die Stift-Schlitz-Verbindung
(33, 34) an ihren zusammenwirkenden Flächen
mit einer Auflage aus elastischem Material versehen ist.

12. Gurtblockiereinrichtung nach Anspruch 1, dadurch
gekennzeichnet, daß im Gurtaufroller (10) die
Berührungsflächen zwischen Gurtaufwickelwelle
(17) und Sperrglied (31) mit einer Auflage aus
elastischem Material versehen sind.

13. Gurtblockiereinrichtung nach Anspruch 1 oder
einem der vorangehenden Ansprüche, dadurch
gekennzeichnet, daß eine Abtasteinrichtung (43)
für die Ein- und Auszugsbewegung des Gurtbandes
(19) vorgesehen ist, welche bei eingezogenem
Gurtband (19) die Klemmvorrichtung (12) sperrt
und außer Funktion hält.

14. Gurtblockiereinrichtung nach Anspruch 13, dadurch
gekennzeichnet, daß am Gehäuse (11) ein zweiarmiger Hebel (43) schwenkbar gelagert ist,
dessen einer Arm (45) unter der Wirkung einer
Feder (44) ständig am Gurtwickel (46) anliegt.

15. Gurtblockiereinrichtung nach Anspruch 14, dadurch
gekennzeichnet, daß auf einem gehäusefesten
Zapfen (26) ein Bügel (48) drehbar gelagert
ist, der die Achse der Welle (20) einfaßt und
an seinem Umfang einen Anschlag (49) aufweist.

16. Gurtblockiereinrichtung nach Anspruch 15, dadurch
gekennzeichnet, daß der andere Arm (47) des

0175246

Hebels (43) und der Anschlag (49) des Bügels (48) derart angeordnet sind, daß sie bei eingezogenem Gurtband (19) in Eingriff stehen.

Zusammenfassung

0175246

Fig. 1

Fig. 2

Fig. 3

0175246

Fig. 3a

Fig. 3b

5/8

0175246

Fig. 4

6/8

Fig.5

Fig.6

0175246

Fig. 7

Fig. 8